# EUROPÄISCHE PATENTSCHRIFT

(11) **EP 2 636 964 B1**
(45) Veröffentlichungstag und Bekanntmachung des Hinweises auf die Patenterteilung: **09.05.2018**
(21) Anmeldenummer: 12158301.7
(22) Anmeldetag: 06.03.2012
(51) Int. Cl.: F24F 11/00

(54) **Verfahren zur Überprüfung der Luftqualität in einem Operationsraum**
Method for checking the air quality in an operating theatre
Procédé de surveillance de la qualité d'air dans une salle d'opération

(43) Veröffentlichungstag der Anmeldung: 11.09.2013
(73) Patentinhaber: Weiss Klimatechnik GmbH, 35447 Reiskirchen-Lindenstruth (DE)
(72) Erfinder:
(74) Vertreter: Stoffregen, Hans-Herbert

(56) Entgegenhaltungen:
- DE-A1-102009 044 044
- US-A- 6 099 607
- US-A1- 2006 234 621
- US-B2- 7 113 086

## Beschreibung

Die Erfindung bezieht sich auf ein Verfahren zur Überprüfung und/oder Überwachung der Luftqualität in einem Operationsraum mit in diesem vorhandenen Operationstisch mit auf diesem vorgesehenen Wundfeld sowie zumindest einem Instrumententisch.

Auch nimmt die Erfindung Bezug auf ein Verfahren zum Konditionieren der Luft in einem Raum, insbesondere Reinraum wie Operationsraum, dem über einen Arbeitsbereich, wie Schutzbereich eines Operationstisches, Abwärtsströmung, insbesondere turbulenzarme oder laminare Abwärtsströmung, zugeführt wird.

In Operationsräumen ist sicherzustellen, dass unter Arbeitsbedingungen definierte Grenzwerte der Konzentration an Luft getragener Kontamination eingehalten werden.

In Operationsräumen mit turbulenzarmer Verdrängungsströmung zur Erzielung eines Schutzbereichs, in dem die Operation stattfindet und die Instrumententische positioniert sind, soll eine turbulenzarme oder laminare Abwärtsströmung gewährleistet sein. Hierdurch wird eine Verwirbelung der Luft im Operationsfeld weitestgehend vermieden, und die in das Operationsfeld von der OP-Decke einströmende keimfreie Zuluft zielgerichtet in Richtung Fußboden geführt.

Bei einem nicht ordnungsgemäßen Verhalten, wie z. B. heftiges Bewegen von Personen im Bereich des Operationsfelds und/oder nicht ordnungsgemäßes Anordnen von Geräten in dem Zuluftstrom können Turbulenzen auftreten, die zu einem höheren Risiko für eine Kontamination und somit Gefährdung der zu operierenden Person führen können. Dies kann sich z. B. durch zu einem späteren Zeitpunkt auftretende Entzündungen äußern.

Um eine dreidimensionale, zeitabhängige Messung von Betrag und Richtung der Geschwindigkeit und des Turbulenzgrades einer Luftströmung zu ermöglichen, wird nach der DE-A-103 24 724 ein thermisches Anemometer vorgeschlagen.

Damit Turbulenzen im medizinischen Bereich sichtbar gemacht werden können, wird nach der DE-A-44 05 986 eine als Verteilerlanze mit Lanzenkopf ausgebildete Sonde vorgeschlagen, der eine mit einem Aerosol-Generator verbundene Druckerkammer und eine Ausströmkammer aufweist.

Gegenstand der DE-A-197 02 622 ist ein klimatechnisches Thermoanemometer, das zur Strömungsmessung in einem Gebäuderaum benutzt wird.

Eine Vorrichtung zum automatischen Steuern einer Ventilatoreinrichtung für einen Raum in Abhängigkeit von dessen Temperatur, in der Luft schwebenden Partikeln oder Luftfeuchtigkeit wird in der DE-A-26 00 359 beschrieben.

Eine Messung von toxischen Bestandteilen in einem Raum und eine Steuerung zum Entfernen dieser ist aus der JP-A-04135647 bekannt.

Die DE-A-100 58 720 bezieht sich auf einen Strömungssensor, der insbesondere für Beatmungsgeräte und Anästhesiegeräte bestimmt ist.

Die DIN 1946-4 bezieht sich auf raumlufttechnische Anlagen in Gebäuden und Räu- men des Gesundheitswesens. Der DIN sind Verfahren zu entnehmen, um eine OP- Raum-Qualifizierung zu ermöglichen. Als Methoden werden Turbulenzgradmessungen und Schutzgradmessungen angegeben. Dabei gilt die Norm auch für die Planung, den Bau und die Abnahme raumlufttechnischer Anlagen, wobei in Tabelle 2 der Mindest-umfang einer technischen Abnahmeprüfung angegeben ist. Nach der Abnahme kann sodann ein Operationsraum in Betrieb genommen werden, ohne dass weitere Messun- gen erfolgen.

Ein gattungsgemäßes Verfahren ist der DE-A-10 2009 044 044 zu entnehmen. Dabei wird z. B. im Bereich der Stirnenden eines Operationstisches die Turbulenz der vorbeiströmenden Luft gemessen.

Der vorliegenden Erfindung liegt die Aufgabe zu Grunde, ein Verfahren der eingangs genannten Art so weiterzubilden, dass die in einem Operationsraum zuzuführende Luft eine Qualität aufweist, die eine Gefährdung einer zu operierenden Person vermeidet oder zumindest reduziert. Es soll eine Qualitätssicherung über die im Operationstischbereich herrschende Luftqualität ermöglicht werden. Dabei soll eine hohe Flexibilität gegeben sein, um sowohl Einflüsse in der weiteren Umgebung des Wundfeldes als auch in dessen unmittelbarem Bereich zu ermöglichen.

Zur Lösung der Aufgabe sieht die Erfindung im Wesentlichen ein Verfahren zur Überprüfung und/oder Überwachung der Luftqualität in einem Operationsraum mit in diesem vorhandenen Operationstisch mit auf diesem vorgesehenen Wundfeld sowie zumindest einem Instrumententisch vor, wobei zur Messung eines die Luftqualität repräsentierenden Luftqualitätsparameters zumindest im Bereich des Wundfelds oder eines auf das Wundfeld normierten Bereichs zumindest ein Messwertaufnehmer angeordnet wird, wobei die zu überprüfende und/oder zu überwachende Luft über zumindest eine den Messwertaufnehmer bildende Öffnung angesaugt und sodann einer Messsonde zugeführt wird und wobei aus der angesaugten Luft der die Luftqualität repräsentierende Luftqualitätsparameter aus der Gruppe Temperatur, Partikelkonzentration, Partikelanzahl mit und/oder ohne Keimbelastung gemessen wird.

Dabei ist insbesondere vorgesehen, dass der im Bereich des Wundfelds angeordnete Messwertaufnehmer in einer oberhalb des Wundfelds angeordneten Operationsleuchte oder an der Zuführung zu dieser angeordnet wird. Hierdurch ist sichergestellt, dass das Personal durch den Messwertaufnehmer nicht behindert wird. Auch sind konstruktive Änderungen im Bereich des Operationstischs nicht erforderlich. Insbesondere ist der Messwertaufnehmer seitlich oder auf der Rückseite der Operationsleuchte angeordnet.

Hierdurch werden Messwerte ermittelt, die qualitative Aussagen über die Luftqualität im Bereich des Wundfelds ermöglichen, gegebenenfalls durch zuvor erfolgte Kalibrierungen.

Die Angabe "auf das Wundfeld normierter Bereich" bedeutet, dass auch in einem größeren Abstand von dem Wundfeld gemessen werden kann, wobei unter Berücksichtigung von z.B. Kalibrier- oder Erfahrungswerten Rückschlüsse auf die Qualität der Luft im Bereich des Wundfelds gezogen werden. Mit anderen Worten kann in einem Bereich des Operationsraums gemessen werden, der gegebenenfalls erheblich beabstandet zum Wundfeld, jedoch aufgrund von z.B. abgespeicherten Messwerten die Möglichkeit bietet, Aussagen über die Luftqualität im Bereich des Wundfelds zu treffen. Insoweit ist
auch nachstehend der Begriff "Wundfeld" im Sinne eines normierten Bereichs zu verstehen.

Es ist vorgesehen, dass neben oder alternativ zu den in der den Messwertaufnehmer durchsetzenden Luft enthaltenden Partikeln auch die Anzahl der Keime gemessen bzw. gezählt wird, d.h., es erfolgt eine Unterscheidung zwischen keimbesiedelten und toten Partikeln. In Abhängigkeit von der Anzahl der keimbesiedelten bzw. luftgetragenen Partikel kann sodann eine Regelung oder Steuerung der dem Operationsraum zuzuführenden Luft erfolgen. Eine Steuerung kann dann erfolgen, wenn Schwellenwerte erreicht bzw. unterschritten sind.

Insbesondere ist vorgesehen, dass zumindest ein weiterer Messwertaufnehmer auf, am oder im Bereich des zumindest einen Instrumententisches angeordnet wird. Sind mehrere Instrumententische vorhanden, so kann jeder Instrumententisch einen Messwertaufnehmer aufweisen.

Um eine hohe Flexibilität zu erzielen, besteht die Möglichkeit, den Messwertaufnehmer dort anzuordnen, wo die Gefahr besteht, dass die Luftqualität negativ beeinflusst ist. Dies kann auch im Bereich eines Operateurs oder einer sonstigen sich im Operationsraum befindlichen Person der Fall sein.

Diese Möglichkeit wird insbesondere dadurch geschaffen, dass Luft am Messort durch Schläuche angesaugt wird, wobei jeder Schlauch mit einer gesonderten Messsonde oder mehrere Schläuche mit einer gemeinsamen Messsonde verbunden sein können.

Die die Luft ansaugenden Schlauchöffnungen werden an den Stellen positioniert, wo eine Messung durchgeführt werden soll. Somit ergibt sich eine hohe Flexibilität und damit Sicherstellung, dass die Qualität der im Wundfeld strömenden Luft die erforderliche Güte aufweist.

Insbesondere die Partikelkonzentration ist von Bedeutung, da die in der Luft befindlichen Partikel Verwachsungen im Gewebe verursachen können und/oder Wege für Keime sind. Somit ist auszuschließen, dass eine hohe Anzahl von Partikeln sich im Wundbereich befindet. Sollte eine unzulässig hohe Anzahl feststellbar sein, so bewirkt ein Zuführen von zusätzlicher Luft einen Verdünnungseffekt und somit eine Reduzierung der Konzentration.

Erfindungsgemäß kann im Bedarfsfall eine Differenzierung zwischen "toten" und "lebenden" Partikeln erfolgen. "Lebende Partikel" bedeutet dabei, dass die Partikel mit Keimen beladen sind. In Abhängigkeit von von den entsprechenden Keim besiedelten Partikeln erfolgt sodann im erforderlichen Umfang eine Änderung der dem Operationsraum zuzuführenden Luft.

Erfindungsgemäß kann ein dynamisches Monitoring - ein kontinuierliches oder ein nach einem Zeitraster erfolgendes Messen - der Luftqualität erfolgen. Hierzu wird insbesondere ein Messwertaufnehmer in unmittelbarem Bereich des Wundfeldes angeordnet, wobei bevorzugterweise der maximale Abstand zwischen Messwertaufnehmer und Wundfeld in etwa der Abstand zwischen dem Wundfeld und der das Wundfeld ausleuchtenden Operationsleuchte ist, ca. 50 cm - 100 cm. Gleiches gilt, wenn anstelle einer Messsonde Luft über einen Schlauch oder eine Leitung angesaugt wird. Der Abstand ist dann derjenige zwischen Ausgangsöffnung und Wundfeld. Geht der Messwertaufnehmer bzw. die Zuführung zu dem Messwertaufnehmer wie ein Schlauch nicht von der Operationsleuchte aus, so sollte der Abstand vorzugsweise im Bereich von 30 cm - 50 cm liegen. Die Erfindung wird jedoch auch dann nicht verlassen, wenn größere Abstände gewählt werden, wobei die Luftqualitätsparameter gegebenenfalls normiert werden, um unabhängig vom Abstand reproduzierbar die Luftqualität ermitteln zu können. Dies kann durch vorherige Kalibriermaßnahmen bzw. Messungen erfolgen.

Es besteht auch die Möglichkeit, mehrere Messwertaufnehmer, also Öffnungen von Schläuchen in dem Operationstisch zu integrieren bzw. an diesem zu befestigen. Gleiches gilt für Instrumententische oder sonstige im Operationsraum befindliche Einrichtungen. Dies schließt auch bekleidetes Operationspersonal ein.

Wird bevorzugterweise als Luftqualitätsparameter die Partikelkonzentration gewählt, so kann auch mittels zumindest eines Messwertaufnehmers eine Schutzgradmessung durchgeführt werden, wie diese im Zusammenhang mit der Abnahme eines Operationsraums nach DIN 1946-4, Anhang C, vorgesehen ist.

Erfindungsgemäß wird entsprechend den Anforderungen an den Operationsraum bzw. das Wundfeld die Luftqualität mit Hilfe charakteristischer Parameter gemessen, um bei unzulässigen wie erhöhten Messwerten eine Regelung bzw. Steuerung der Luft derart durchzuführen, dass der gemessene Parameter innerhalb vorgegebener Grenzwerte liegt. Selbstverständlich besteht auch die Möglichkeit, gleichzeitig - ggfs. an verschiedenen Messstellen - mehr als einen Luftqualitätsparameter zu messen.

Erfindungsgemäß erfolgt ein Messen und gegebenenfalls Verbessern der Luft.

Insbesondere ist vorgesehen, dass die Luftqualität bzw. ein oder mehrere Luftqualitätsparameter online gemessen werden und sodann gemessener Istwert mit einem Sollwert verglichen wird. Wird der Sollwert überschritten, kann ein Signal generiert werden. Zusätzlich oder anstelle des Signals kann eine Steuerung, insbesondere jedoch eine Regelung derart erfolgen, dass der sich einstellende Istwert im Sollwertbereich liegt. Ferner wird von der Erfindung der Gedanke erfasst, dass die Turbulenz online gemessen und bei Überschreitung eines festgelegten Turbulenzgrads von z. B. 30 % ein Signal generiert und/oder in den Operationsraum strömende Luft ein Bezug z. B. nach Richtung und/oder Menge und/oder Strömungsart geregelt wird.

Es erfolgt ein adaptives System, durch das sichergestellt wird, dass eine optimale Luftqualität im Bereich des Operationstisches und insbesondere im Bereich des Wundfelds herrscht.

In eigenerfinderischer Weiterbildung ist vorgesehen, dass der über den zumindest einen Messwertaufnehmer gemessene Luftqualitätsparameter abgespeichert wird. Es kann eine Archivierung der Messergebnisse erfolgen, um diese sodann mit Daten von z. B. Operationsfolgen vergleichen zu können.

Erfindungsgemäß erfolgt ein Messen, Verbessern und Archivieren.

Ein Verfahren zum Konditionieren der Luft in einem Operationsraum mit Operationstisch, dem gerichtete turbulenzarm oder laminar strömende Luft zugeführt wird, zeichnet sich dadurch aus, dass im Bereich des Operationstisches, insbesondere im Bereich eines Wundfelds eines auf einem Operationstisch liegenden Patienten zumindest ein den Turbulenzgrad der strömenden Luft und/oder Partikelzahl in der Luft messender Messwertaufnehmer angeordnet wird und dass in Abhängigkeit des gemessenen Turbulenzgrades die strömende Luft geregelt wird. Insbesondere wird Geschwindigkeit und Volumen der zugeführten Luft geregelt.

Wird der Turbulenzgrad gemessen, so wird unmittelbar ein Sensor am Messort angeordnet, der den Turbulenzgrad ermitteln kann. Entsprechende Sensoren sind aus dem Stand der Technik bekannt. Insoweit wird beispielhaft auf Messsonden der TESTO AG, Lenzkirch, Deutschland, verwiesen.

Gleiches gilt in Bezug auf die Luftqualitätsparameter Luftgeschwindigkeit und Temperatur.

Hinsichtlich der Partikelkonzentrationsmessung und/oder Keimzahlmessung reicht es aus, wenn an einem Messort Luft abgesaugt wird, wie zuvor erläutert worden ist.

In weiterer hervorzuhebender Ausgestaltung der Erfindung bzw. nach einem eigenerfinderischen Aspekt ist vorgesehen, dass von mehreren Messwertaufnehmern ermittelte Luftqualitätsparameter gemittelt werden und entsprechender Wert als Stellgröße zum Regeln oder Steuern der dem Operationsraum zuzuführenden Luft benutzt wird, wobei insbesondere der im Bereich des Wundfelds gemessene Luftqualitätsparameterwert mit einem Faktor F mit F > 1 gewichtet wird.

Durch den Mittelwert als Regelgröße wird sichergestellt, dass die Luft im Operationsraum die erforderliche Qualität aufweist. Um jedoch insbesondere im Bereich des Wundfelds sicherzustellen, dass sich in diesem eine mindere Qualität, insbesondere bei der Messung der Partikelkonzentration eine zu hohe Konzentration von möglicher Keime transportierender Partikel befinden, kann der Messwert am Wundfeld oder die im Bereich des Wundfelds ermittelten Messwerte mit einem Faktor größer als 1 gewichtet werden.

In Weiterbildung ist vorgesehen, dass dann, wenn der Messwert bzw. die Messwerte im Bereich des Wundfelds einen unzulässigen Wert überschreiten, ein Regeln bzw. Steuern der dem Operationsraum zuzuführenden Luft ausschließlich in Abhängigkeit von dem im Bereich des Wundfelds gemessenen Luftqualitätsparameterwert erfolgt.

Besteht die Möglichkeit, dass der bzw. die Luftqualitätsparameter an ortsveränderlichen Messstellen ermittelt werden, so können selbstverständlich auch stationäre Messstellen zum Einsatz gelangen bzw. eine Mischung von ortsveränderlichen und stationären Messstellen. Eine Positionierung an einer OP-Lampe oder eine Zuführung zu dieser ist bevorzugt. Insoweit ist die Positionierung auch als eine solche im Bereich des Wundfelds zu verstehen.

Unabhängig hiervon und in hervorzuhebender Ausgestaltung der Erfindung ist vorgesehen, dass von mehreren in dem Operationsraum verteilt angeordneten Messstellen diejenigen ausgewählt werden, die in Bezug auf die Art des Wundfelds bzw. Größe des Wundfelds als relevant bewertet werden, um sodann auf der Basis der von den ausgewählten Messstellen ermittelten Messwerten die Regelung bzw. Steuerung der dem Operationsraum zuzuführenden Luft durchzuführen. Die Art des Wundfeldes schließt auch die Dauer einer Operation ein, so dass demzufolge auch indirekt ein Wechsel von OP-Personal oder die Anzahl des Personals bei der Ermittlung und Bewertung der Luftqualität mit einbezogen werden.

Hervorzuheben ist des Weiteren, dass die Bewertung des ausgewählten und für die Luftqualität charakteristischen Parameters in Abhängigkeit von einer durchzuführenden Operation erfolgen kann, da für unterschiedliche Operationen unterschiedliche Raumluftklassen vorgegeben sind. So wird z. B. für Operationen von Brandverletzungen oder z. B. Herz- und Knochenoperationen die Raumluftklasse 1a), für Operationen im Hals-/ Nasen-/ Ohrenbereich die Raumklasse 1b) vorgegeben. Es erfolgt somit eine Auswertung in Abhängigkeit von der Art der Operation und damit der Art des Wundfelds.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Prinzipdarstellung eines Operationsraums,
- Fig. 2: eine Draufsicht auf einen Operationstisch und
- Fig. 3: eine zweite Prinzipdarstellung eines Operationsraums.

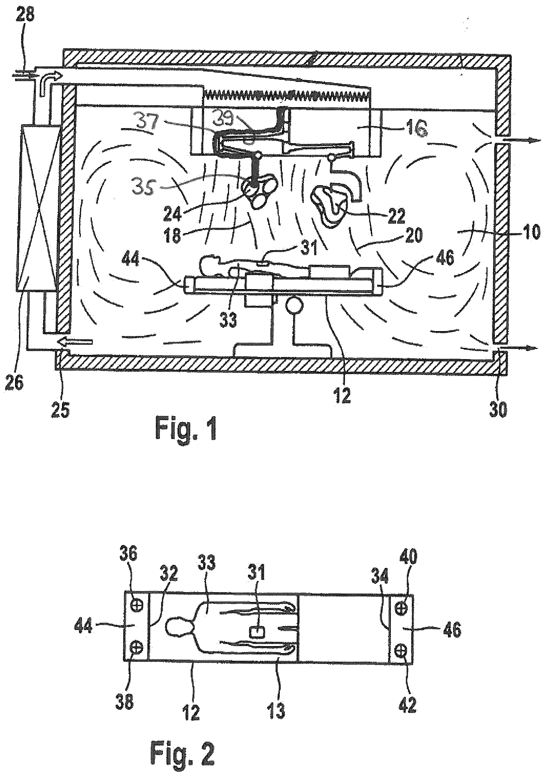

Die erfindungsgemäße Lehre wird in den Fig. 1 und 2 anhand eines Turbulenzgradmesswertaufnehmers als Luftqualitätsmesswertaufnehmer erläutert, ohne dass hierdurch die erfindungsgemäße Lehre beschränkt wird. Vielmehr ist die entsprechende Angabe als Synonym für Parameter zu verstehen, die die Luftqualität bestimmen.

Insbesondere sind als Synonym auch Messwertaufnehmer oder Sonden zu verstehen, mit denen die Anzahl der Partikel und/oder Keime gezählt werden können.

Unabhängig hiervon wird nachstehend auch anstelle von Messwertaufnehmern der Begriff Messsonde benutzt, der technisch insoweit gleich zu verstehen ist, als dass zumindest ein für die Luftqualität charakteristischer Wert ermittelt bzw. bestimmt wird. Auch schließt der Begriff Messwertaufnehmer Öffnungen wie Schlauchöffnungen ein, über die Luft angesaugt und sodann einer Messsonde zugeführt wird, um z.B. die Anzahl der Partikel in der Luft zu bestimmen, also die Partikelkonzentration. Dies ist insbesondere wichtig, da Partikel Vehikel für Keime sind, so dass sichergestellt werden muss, dass in den Wundbereich eines zu operierenden Patienten so wenig wie möglich an Partikeln und damit luftgetragenen Keimen gelangen können.

Der Fig. 1 ist rein prinzipiell ein Operationsraum 10 zu entnehmen, in dem ein Operationstisch 12 über einen quaderförmigen Korpus einer Zuluftdecke 16 laminar turbulenzarme Abwärtsströmung zugeführt wird, wie dies durch die Pfeile 18, 20 angedeutet werden soll. Im Bereich der Luftaustrittsöffnung sind Operationslampen 22, 24 angeordnet, die aerodynamisch derart ausgelegt wird, dass eine Erhöhung der Turbulenz nur im geringen Umfang erfolgt.

Wie sich aus den Pfeilen an sich ergibt, ist in dem Operationsraum 10 ein Umluftsystem mit Außenluftanteil vorgesehen, d. h. ein Teil der Luft wird über eine im Bodenbereich vorhandene Öffnung 25 abgeführt und sodann über eine Luftkonditionierungseinrichtung 26 dem Operationsraum 10 wieder zugeführt. Wird Außenluft über eine Öffnung 28 zugegeben, so wird ein entsprechender Anteil der Luft aus dem Operationsraum 10 über eine weitere Öffnung 30 abgeführt. Insoweit wird jedoch auf hinreichend bekannte Techniken verwiesen.

Die über die Zuluftdecke 16 und damit dem Korpus zugeführte Luft ist keimfrei, um Infektionen bei einem zu operierenden Patienten zu vermeiden.

Damit durch Induktion so wenig wie möglich an kontaminierter Luft in das Operationsfeld, d. h. Wundfeld 31 einer zu operierenden bzw. operierten Person 33 sowie dessen Umfeld, Instrumententische und steril gekleidetes OP-Personal gelangt, muss darauf geachtet werden, dass die laminar oder turbulenzarme Abwärtsströmung 18, 20 auch während der Operation aufrechterhalten bleibt. Um insoweit eine Überprüfung vorzunehmen, ist erfindungsgemäß vorgesehen, dass z. B. im jeweiligen Stirnende 32, 34 des Operationstischs 12 Messsonden 36, 38 bzw. 40, 42 angeordnet werden, über die der Turbulenzgrad im Sinne obiger Ausführungen gemessen wird. Die Messsonden 36, 38, 40, 42 sind vorzugsweise in Ansätzen 44, 46 integriert, die im jeweiligen Stirnrandbereich 32, 34 mit dem Operationstisch verbunden werden. Somit wird durch die Messsonden 36, 38, 40, 42 die Liegefläche 13 des Operationstisches 12 nicht verkleinert. Selbstverständlich können die Sonden 36, 38, 40, 42 auch unmittelbar in den Operationstisch 12 integriert bzw. angebaut werden.

Vorzugsweise befinden sich die Sonden bzw. die Öffnungen der zu den Sonden führenden Leitungen oder Schläuche im Bereich der OP-Leuchten 22, 24. So kann z.B. eine Sonde 35 im Randbereich der OP-Leuchte 24 angeordnet sein. Insoweit ist die Sonde 35 als im Bereich des Wundfelds angeordnet zu verstehen. Es besteht jedoch auch die Möglichkeit, auf der Rückseite einer oder beider Operationsleuchten 22, 24 Sonden bzw. zu Sonden führende Öffnungen von Leitungen bzw. Schläuchen vorzusehen.

In Abhängigkeit von der Position der Sonde kann eine Normierung erfolgen, durch die Rückschlüsse auf die Luftqualität im unmittelbaren Bereich des Wundfelds 31 gezogen werden können. Dies kann durch zuvor durchgeführte Kalibrierungen erfolgen. Führt eine Leitung bzw. ein Schlauch 37 zu einer Sonde wie der Sonde 35, so kann ein Entlangführen entlang des Gestänges 39 der OP-Leuchte 22, 24 erfolgen, über die die Operationsleuchte 22, 24 von der Decke des OP-Raums 10 abgehängt ist und über die die OP-Leuchte, d.h. der die Leuchtmittel aufweisende Kopf in gewünschte Positionen verstellt werden kann. Der Schlauch 37 bzw. eine entsprechende Leitung kann einen Innendurchmesser zwischen 6 mm und 8 mm aufweisen.

Die die Luftqualität messenden Sonden können jedoch auch in anderen Bereichen des Operationsraums 10 vorgesehen sein, z. B. im Bereich von Instrumententischen, die auch abhängende Instrumentenablagen einschließen, oder in den Bereichen, in denen sich vorrangig das Operationspersonal aufhält, um nur beispielhaft einige bevorzugte Messstellen zu nennen.

Bei den Messsonden handelt es sich insbesondere um solche, wie diese von der TESTO AG, Lenzkirch, Deutschland, angeboten werden.

Durch die die Messsonden 36, 38, 40, 42 beaufschlagende Luftströmung kann der Turbulenzgrad ermittelt werden mit der Folge, dass bei unzulässiger Turbulenz z.B. ein Signal wie akustisches oder optisches Signal generiert wird, um dem medizinischen Personal anzuzeigen, dass unzulässige Turbulenzen auftreten, die z.B. durch Bewegung des Personals und/oder falsches Positionieren von Gerätetischen und/oder durch falsche Stellung von oberhalb des Operationstischs 12 vorhandenen Einrichtungen wie den Operationslampen 22, 24 hervorgerufen werden. Ergänzend oder alternativ kann in Abhängigkeit von dem gemessenen Turbulenzgrad die von der Zuluftdecke 16 über den Korpus 14 zuströmende Luft beeinflusst werden, indem z. B. die Luftmenge und/oder -geschwindigkeit verändert wird, um die Turbulenzen zu verringern. Es erfolgt eine Regelung.

Hierdurch ist eine Qualitätssicherung gegeben, die es ermöglicht, dass im Operationsfeld gewünschte turbulenzarme laminare Abwärtsströmungen auf das Operationsfeld auftreffen.

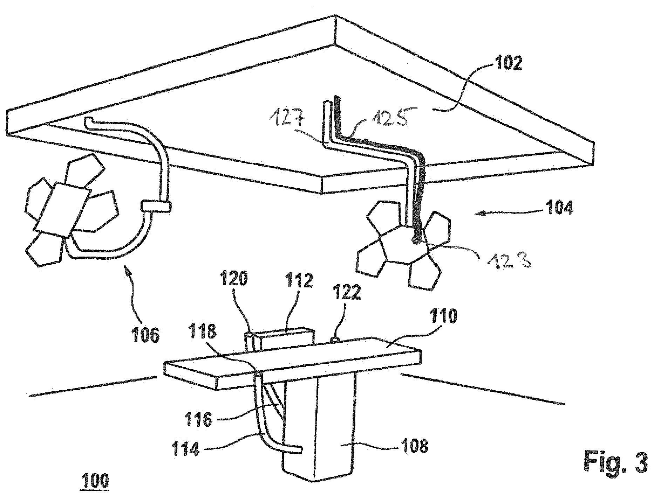

Der Fig. 3 ist eine weitere Prinzipdarstellung eines Operationsraums 100 zu entnehmen, von dessen Decke 102 Operationslampen 104, 106 abhängen. In der Mitte des Operationsraums befindet sich ein von einer Säule 108 ausgehender Operationstisch 110.

Im Ausführungsbeispiel gehen von der Säule 108 Schläuche 114, 116 aus, die mit ihren Öffnungen 118 bzw. 120 im Bereich des Operationsfeldes, also auf der Oberseite des Operationstisches 110 bzw. im Bereich des Instrumententisches 112, enden, um über diese Luft ansaugen zu können. Ferner ist eine weitere Öffnung 122 dargestellt, die unmittelbar im Bereich eines Wundfeldes eines zu operierenden Patienten positioniert wird. Dabei sollte der Abstand zwischen der Öffnung 122 und dem Wundfeld vorzugsweise nicht mehr als 30 cm betragen.

Die Schläuche werden zu einer Messsonde geführt, um die über die Öffnungen 118, 120, 122 angesaugte Luft in Bezug auf die Partikelkonzentration zu messen. Dabei besteht die Möglichkeit, dass jede Öffnung 118, 120, 122, die insoweit als Messwertaufnehmer zu bezeichnen ist, mit einer gesonderten Messsonde verbunden ist oder die Schläuche oder eine gewünschte Anzahl von Schläuchen mit einer gemeinsamen Messsonde verbunden werden.

Sind in der Fig. 3 beispielhaft drei Messwertaufnehmer mit Öffnungen 118, 120, 122 dargestellt, so kann in dem Operationsraum 100 eine größere Anzahl vorgesehen sein. Auch kann die Positionierung entsprechender Messwertaufnehmer dort erfolgen, wo eine Beeinflussung der in den Operationsraum 100 strömenden Luft, die von der Decke 112 in Richtung des Operationstisches 110 laminar turbulenzarm abwärts strömt, zu vermuten ist. Es wird somit ein hochflexibles System zur Überwachung der Luftqualität im Operationsraum 100 zur Verfügung gestellt, wobei zur Beeinflussung bzw. Regelung der in den Operationsraum 100 strömenden Luft die über die Öffnungen 118, 120, 122, also Messwertaufnehmer, abgesaugte Luft und die sodann festgestellte Partikel- und/oder Keimkonzentrationen ausgewertet werden kann, um eine Stellgröße zu erhalten, über die die Luftzufuhr beeinflusst wird. Dabei kann insbesondere der Messwert des Messwertaufnehmers, also der Öffnung, die sich in unmittelbarer Nähe des Wundfelds befindet, gewichtet werden, wodurch zusätzlich sichergestellt wird, dass die im Bereich des Wundfelds zugeführte Luft den notwendigen Qualitätsanforderungen genügt.

Der Fig. 3 ist des Weiteren zu entnehmen, dass eine Messsonde 123 unmittelbar an den Operationslampen 104 befestigt ist, um Luft anzusaugen und einen Parameter zu ermitteln, um eine Aussage über die Luftqualität treffen zu können. Insbesondere wird die Partikelkonzentration ermittelt, wobei gegebenenfalls die Anzahl der Partikel, die keimbeladen sind, gesondert gezählt wird. Auch kann ein Vergleich zwischen der Gesamtpartikelzahl und der Anzahl der Partikel erfolgen, die mit Keimen beladen sind. Hierdurch ergeben sich Rückschlüsse über die Luftqualität im Bereich des Wundfelds.

Entsprechend der zeichnerischen Darstellung führt zu der Messsonde 123 eine Leitung 125, die entlang des Gestänges 127 der Operationsleuchte 104 verläuft. In diesem Zusammenhang ist auch noch einmal darauf hinzuweisen, dass der Begriff "Messsonde" auch einschließt, dass die Leitung 125 - z.B. im Bereich der Operationsleuchte 104, d.h. deren Leuchtgehäuse - eine Öffnung 125 aufweist, um über diese Luft über die Leitung 125 anzusaugen, die sodann zu einer mit der Leitung 125 verbundenen Messsonde gelangt. Anordnen der Messsonde im Bereich des Wundfelds bedeutet dann das Anordnen der Ausgangsöffnung im Bereich des Wundfelds.

Es besteht auch die Möglichkeit, entsprechende Schläuche unmittelbar an der Kleidung von Operationspersonal zu befestigen, um Beeinflussungen durch das Operationspersonal zu erfassen.

Es besteht des Weiteren die Möglichkeit, die gemessenen Messwerte zu archivieren, um diese sodann mit Operationsfolgen vergleichen zu können, um somit Rückschlüsse zu ziehen, ob diese durch während der Operation herrschende Luftqualität, die auch den Grad der Turbulenz einschließen kann, zumindest mitverursacht sein könnten.

Wie zuvor erläutert worden ist, können Messwerte archiviert werden, um zu einem späteren Zeitpunkt zu überprüfen, inwieweit ein oder mehrere die Luftqualität bestimmenden Parameter während einer Operation z.B. einen Heilungsprozess beeinflusst haben können. Erfindungsgemäß erfolgt ein dynamisches Monitoring, die Parameter werden also während des Operierens gemessen und im gewünschten Umfang archiviert.

Durch das Messen der Parameter während des Operierens kann eine Regelung der Parameter in Abhängigkeit von den gemessenen Ist-Werten erfolgen, um auf vorgegebene Soll-Werte bzw. Soll-Wertbereiche nachgeregelt zu werden. Hierzu wird die zur Bestimmung der Luftparameter benötigte Anzahl der Messsonden mit einer Steuerung verbunden, über die die erforderliche Regelung erfolgt.

## Patentansprüche

1. Verfahren zur Überprüfung und/oder Überwachung der Luftqualität in einem Operationsraum (10, 100) mit in diesem vorhandenen Operationstisch (12, 110) mit auf diesem vorgesehenen Wundfeld (31) sowie zumindest einem Instrumen tentisch (12), wobei zur Messung eines die Luftqualität repräsentierenden Luftqualitätsparameters zumindest im Bereich des Wundfelds (31) oder eines auf das Wundfeld normierten Bereichs zumindest ein Messwertaufnehmer (35, 36, 38, 40, 42, 118, 120, 122, 123) angeordnet wird, **dadurch gekennzeichnet,**
**dass** die zu überprüfende
und/oder zu überwachende Luft über zumindest eine den Messwertaufnehmer bildende Öffnung angesaugt und sodann einer Messsonde zugeführt wird und wobei aus der angesaugten Luft der die Luftqualität repräsentierende Luftqualitätsparameter aus der Gruppe Temperatur, Partikelkonzentration, Partikelanzahl mit und/oder ohne Keimbelastung gemessen wird.

2. Verfahren nach Anspruch 1,
**dadurch gekennzeichnet,**
**dass** zumindest ein Messwertaufnehmer (120) auf, am und/oder im Bereich des Instrumententisches (112) angeordnet wird.

3. Verfahren nach Anspruch 1 oder 2,
**dadurch gekennzeichnet,**
**dass** zur Bestimmung des zumindest einen die Luftqualität repräsentierenden Luftqualitätsparameters dieser im Bereich einer in dem Operationsraum (10, 100) vorhandenen Operationsleuchte (22, 24, 104, 106) gemessen wird.

4. Verfahren nach zumindest einem der vorhergehenden Ansprüche,
**dadurch gekennzeichnet,**
**dass** ein oder mehrere Luftqualitätsparameter online gemessen werden und der bzw. die mit dem zumindest einen Messwertaufnehmer (35, 36, 38, 40, 42, 118, 120, 122, 123) gemessene Parameter bzw. gemessenen Parametern durch Regelung der dem Operationsraum (10, 100) zuzuführenden Luft derart geregelt wird bzw. werden, dass ein ermittelter Ist-Wert im Bereich eines Soll-Werts liegt.

5. Verfahren nach zumindest einem der vorhergehenden Ansprüche,
**dadurch gekennzeichnet,**
**dass** in Abhängigkeit von dem gemessenen zumindest einen Luftqualitätsparameter die in den Operationsraum (10, 100) zuzuführende Luft in Bezug auf Geschwindigkeit und/oder Menge bzw. Volumen geregelt wird.

6. Verfahren nach zumindest einem der vorhergehenden Ansprüche,
**dadurch gekennzeichnet,**
**dass** der über den zumindest einen Messwertaufnehmer (35, 36, 38, 40, 42, 118, 120, 122, 123) gemessene zumindest eine Luftqualitätsparameter abgespeichert wird, insbesondere über die Dauer einer Operation abgespeichert, und archiviert wird, und mit Daten von Operationsfolgen verglichen wird.

7. Verfahren nach zumindest einem der vorhergehenden Ansprüche,
**dadurch gekennzeichnet,**
**dass** von mehreren Messwertaufnehmern (35, 36, 38, 40, 42, 118, 120, 122, 123) ermittelte Luftqualitätsparameterwerte gemittelt werden und entsprechender Wert als Stellgröße zur Regelung oder Steuerung der dem Operationsraum (10, 100) zuzuführenden Luft benutzt wird, wobei insbesondere der im Bereich des Wundfelds (31) gemessene Luftqualitätsparameterwert mit einem Faktor F mit F > 1 gewichtet wird.

8. Verfahren nach zumindest einem der vorhergehenden Ansprüche,
**dadurch gekennzeichnet,**
**dass** ein Regeln bzw. Steuern der dem Operationsraum (10, 100) zuzuführenden Luft ausschließlich in Abhängigkeit von dem im Bereich des Wundfelds (31) oder des auf dieses normierten Bereichs gemessenen Luftqualitätsparameter dann erfolgt, wenn der gemessene Wert einen Grenzwert überschreitet.

9. Verfahren nach zumindest einem der vorhergehenden Ansprüche,
**dadurch gekennzeichnet,**
**dass** an zumindest einer ortsveränderlichen Messstelle, vorzugsweise an mehreren ortsveränderlichen Messstellen, der zumindest eine Luftqualitätsparameter gemessen wird.

10. Verfahren nach zumindest einem der vorhergehenden Ansprüche,
**dadurch gekennzeichnet,**
**dass** von mehreren in den Operationsraum (10, 100) verteilt angeordneten Messstellen für Art des Wundfelds relevante Messstellen ausgewählt werden und der in diesen ausgewählten Messstellen ermittelte zumindest eine Luftqualitätsparameter zur Regelung bzw. Steuerung der dem Operationsraum zuzuführenden Luft benutzt wird.

11. Verfahren nach zumindest einem der vorhergehenden Ansprüche,
**dadurch gekennzeichnet,**
**dass** eine Bewertung der die Luftqualität repräsentierenden Luftqualitätsparameter in Abhängigkeit von einer durchzuführenden Operation erfolgt.

## Claims

1. Method for verifying and/or monitoring the air quality in an operating room (10, 100) with operating table (12, 110) present therein with wound area (31) provided thereon and with at least one instrument table (12), where for measurement of an air quality parameter representing the air quality at least one measuring sensor (35, 36, 38, 40, 42, 118, 120, 122, 123) is arranged at least in the region of said wound area (31) or in a region standardized to said wound area, wherein the air to be verified and/or monitored is sucked in via at least one opening forming said measuring sensor and then passed to a measuring probe and where from said sucked-in air the air quality parameter representing the air quality is measured from the group comprising temperature, particle concentration and particle number with and/or without bacterial load.

2. Method according to claim 1,
**wherein**
at least one measuring sensor (120) is arranged on, at and/or in the region of the instrument table (112).

3. Method according to claim 1 or 2,
**wherein**
for determining the at least one air quality parameter representing the air quality said parameter is measured in the region of an operating lamp (22, 24, 104, 106) present in the operating room (10, 100).

4. Method according to at least one of the preceding claims,
**wherein**
one or more air quality parameters are measured online and the parameter(s) measured with the at least one measuring sensor (35, 36, 38, 40, 42, 118, 120, 122, 123) is/are regulated by closed-loop control of the air to be supplied to the operating room (10, 100) such that a determined actual value is within the range of a set value.

5. Method according to at least one of the preceding claims,
**wherein**
the air to be supplied into the operating room (10, 100) is regulated in respect of speed and/or quantity or volume depending on the at least one air quality parameter measured.

6. Method according to at least one of the preceding claims,
**wherein**
the at least one air quality parameter measured using the at least one measuring sensor (35, 36, 38, 40, 42, 118, 120, 122, 123) is saved, in particular saved over the duration of an operation, archived and compared with data of operating results.

7. Method according to at least one of the preceding claims,
**wherein**
air quality parameter values determined by several measuring sensors (35, 36, 38, 40, 42, 118, 120, 122, 123) are averaged and the corresponding value is used as a variable for closed-loop or open-loop control of the air to be supplied to the operating room (10, 100), where in particular said air quality parameter value measured in the region of the wound area (31) is weighted with a factor F where F > 1.

8. Method according to at least one of the preceding claims,
**wherein**
closed-loop or open-loop control of the air to be supplied to the operating room takes place exclusively depending on the air quality parameter measured in the region of the wound area (31) or in the region standardized thereto when the measured value exceeds a limit value.

9. Method according to at least one of the preceding claims,
**wherein**
the at least one air quality parameter is measured at at least one non-stationary measurement point, preferably at several non-stationary measurement points.

10. Method according to at least one of the preceding claims,
**wherein**
measurement points relevant for the type of the wound area are selected from several measurement points arranged spread over the operating room (10, 100), and the at least one air quality parameter determined in said selected measurement points is used for closed-loop or open-loop control of the air to be supplied to said operating room.

11. Method according to at least one of the preceding claims,
**wherein**
the air quality parameter representing the air quality is evaluated depending on an operation to be performed.

## Revendications

1. Procédé de contrôle et/ou de surveillance de la qualité de l'air dans une salle opératoire (10, 100) avec une table d'opération (12, 110) présente dans ladite salle opératoire, avec un champ opératoire (31) prévu sur ladite table d'opération ainsi qu'au moins une table à instruments (12), sachant qu'au moins une sonde (35, 36, 38, 40, 42, 118, 120, 122, 123) servant à mesurer un paramètre de qualité d'air représentant la qualité de l'air est disposée au moins dans la zone du champ opératoire (31) ou d'une zone normalisée sur le champ opératoire, **caractérisé en ce que** l'air à contrôler et/ou à surveiller est aspiré par le biais d'au moins un orifice formant la sonde puis guidé vers une sonde de mesure et sachant qu'est mesurée à partir de l'air aspiré le paramètre de qualité d'air représentant la qualité de l'air et appartenant au groupe température, concentration des particules, nombre de particules avec et/ou sans contamination microbienne.

2. Procédé selon la revendication 1,
**caractérisé en ce**
**qu'**au moins une sonde (120) est disposée sur, contre ou dans la zone de la table à instruments (112).

3. Procédé selon la revendication 1 ou 2,
**caractérisé en ce**
**qu'**afin de déterminer ledit au moins un paramètre de qualité d'air représentant la qualité de l'air, celui-ci est mesuré dans la zone d'un scialytique (22, 24, 104, 106) présent dans la salle opératoire (10, 100).

4. Procédé selon au moins une des revendications précédentes,
**caractérisé en ce**
**qu'**un ou plusieurs paramètres de qualité d'air sont mesurés en ligne et que le paramètre mesuré/les paramètres mesurés avec ladite au moins une sonde (35, 36, 38, 40, 42, 118, 120, 122, 123) est régulé/sont régulés par régulation de l'air à fournir à la salle opératoire (10, 100) de telle sorte qu'une valeur réelle déterminée se situe au niveau d'une valeur de consigne.

5. Procédé selon au moins une des revendications précédentes,
**caractérisé en ce**
**que** l'air à fournir à la salle opératoire (10, 100) est régulé en termes de vitesse et/ou quantité ou volume en fonction dudit au moins un paramètre de qualité d'air mesuré.

6. Procédé selon au moins une des revendications précédentes,
**caractérisé en ce**
**que** ledit au moins paramètre de qualité d'air mesuré par le biais de ladite au moins une sonde (35, 36, 38, 40, 42, 118, 120, 122, 123) est enregistré, notamment pendant toute la durée d'une opération et archivé, et comparé aux données des conséquences postopératoires.

7. Procédé selon au moins une des revendications précédentes,
**caractérisé en ce**
**que** les valeurs du paramètre de qualité d'air déterminées par plusieurs sondes (35, 36, 38, 40, 42, 118, 120, 122, 123) sont moyennées et que la valeur obtenue est utilisée comme valeur de réglage pour la régulation ou la commande de l'air à fournir à la salle opératoire (10, 100), sachant que notamment la valeur du paramètre de qualité d'air mesurée dans la zone du champ opératoire (31) est pondérée avec un coefficient F où F > 1.

8. Procédé selon au moins une des revendications précédentes,
**caractérisé en ce**
**qu'**une régulation ou commande de l'air à fournir à la salle opératoire (10, 100) a lieu uniquement en fonction du paramètre de qualité d'air mesuré dans la zone du champ opératoire (31) ou de la zone normalisée sur celui-ci si la valeur mesurée dépasse une valeur limite.

9. Procédé selon au moins une des revendications précédentes,
**caractérisé en ce**
**que** sur au moins un point de mesure à position variable, de préférence sur plusieurs points de mesure à position variable, est mesuré ledit au moins un paramètre de qualité d'air.

10. Procédé selon au moins une des revendications précédentes,
**caractérisé en ce**
**que** sont sélectionnés, parmi plusieurs points de mesure répartis dans la salle opératoire (10, 100), les points de mesure pertinents pour le type de champ opératoire et que ledit au moins un paramètre de qualité d'air déterminé à ces points de mesure sélectionnés est utilisé pour la régulation ou la commande de l'air à fournir à la salle opératoire.

11. Procédé selon au moins une des revendications précédentes,
**caractérisé en ce**
**qu'**une évaluation des paramètres de qualité d'air représentant la qualité de l'air a lieu en fonction d'une opération à réaliser.
